# EUROPEAN PATENT SPECIFICATION

(11) **EP 3 860 072 B1**
(45) Date of publication and mention of the grant of the patent: **01.01.2025**
(21) Application number: 19864265.4
(22) Date of filing: 29.09.2019
(51) Int. Cl.: H04L 65/1104, H04L 65/1069, H04M 7/12

(54) **IP-BASED METHOD, APPARATUS AND SYSTEM FOR NARROW-BAND SERVICE SOUND PLAYING, AND STORAGE MEDIUM**
IP-BASIERTES VERFAHREN, VORRICHTUNG UND SYSTEM ZUR TONWIEDERGABE EINES SCHMALBAND-DIENSTES UND SPEICHERMEDIUM
PROCÉDÉ, APPAREIL ET SYSTÈME BASÉS SUR IP POUR LA LECTURE D'UN SON DE SERVICE À BANDE ÉTROITE ET SUPPORT D'ENREGISTREMENT

(30) Priority: 29.09.2018 CN 201811150562
(43) Date of publication of application: 04.08.2021
(73) Proprietor: Nanjin Zhongxing Software Co, Ltd., Yuhuatai District Nanjing, Jiangsu 210012 (CN)
(72) Inventor: YANG, Jianjun, Nanjing, Jiangsu 210012 (CN)
(74) Representative: Aipex B.V.
(86) International application number: PCT/CN2019/109090
(87) International publication number: WO 2020/063973

(56) References cited:
- CN-A- 1 980 282
- CN-A- 102 594 804
- CN-A- 102 752 723
- CN-A- 102 752 723
- US-A1- 2003 167 337

## Description

### TECHNICAL FIELD

The embodiments herein relate to the field of communication technology and, in particular, to a method, apparatus and system for narrowband service announcement playback over an IP network and a storage medium.

### BACKGROUND

For traditional announcement playback of a narrowband service, and prompting an announcement and collecting user information of a narrowband service are typically performed by an independent intelligent peripheral (IP) that is connected through an E1 line. However, with the development of full over an IP network, many telecom operators require full-IP networking. Therefore, the traditional mode of announcement playback through an independent IP cannot satisfy the networking requirements of the operators. Therefore, there is an urgent need to provide a solution of announcement playback in both a broadband environment and a narrowband environment, that is, a solution of prompting an announcement and collecting user information of a narrowband service by using a media server, a broadband announcement playback device. Further relevant technologies are known from CN 102752723 A which relates to a method for controlling broadband playback by utilizing a narrowband service.

### SUMMARY

In view of this, an object of the embodiments herein is to provide a method, apparatus and system for narrowband service announcement playback over an IP network and a storage medium to solve a problem in which the existing narrowband service announcement playback technology that uses an independent IP cannot satisfy full-IP networking.

The invention is defined by a method for narrowband service announcement playback over an IP network according to claim 1, a corresponding system for narrowband service announcement playback over an IP network according to claim 7 and a storage medium according to claim 8. Further embodiments are defined by the dependent claims.

### BRIEF DESCRIPTION OF DRAWINGS

FIG. 1 is a flowchart of a method for narrowband service announcement playback over an IP network according to embodiment one of the present application.
FIG. 2 is a flowchart of another method for narrowband service announcement playback over the IP network according to embodiment two of the present application.
FIG. 3 is a signaling diagram of another method for narrowband service announcement playback over the IP network according to embodiment three of the present application.
FIG. 4 is a schematic diagram of a system for narrowband service announcement playback over the IP network according to embodiment four of the present application.

The object, function features, and advantages of the embodiments herein are further described hereinafter in conjunction with the embodiments with reference to the drawings.

### DETAILED DESCRIPTION

The present application is described in detail hereinafter in conjunction with the drawings and the embodiments, from which the problem to be solved, the solution, and the beneficial effects of the present application are more apparent. It is to be understood that the embodiments described herein are intended to explain and not to limit the embodiments herein.

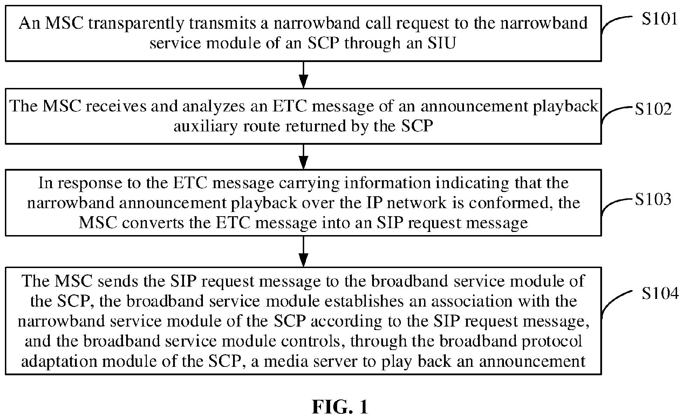

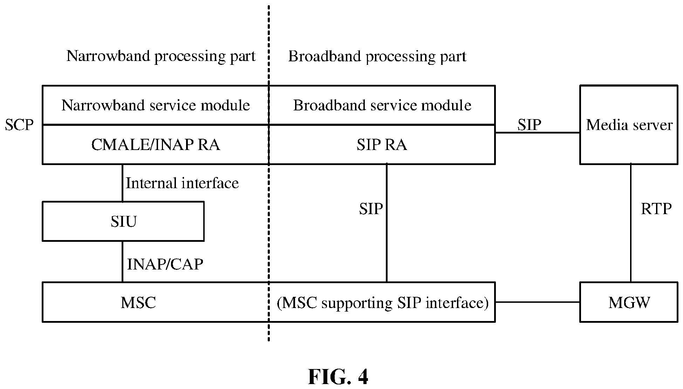

Embodiment one of the present application provides a method for narrowband service announcement playback over an IP network. The method is based on that a mobile switching center (MSC) has the capability of a Session Initiation Protocol (SIP) interface. The method can be implemented by using a system architecture as shown in FIG. 4. Referring to FIG. 1, the process of the method includes steps S101 to S104. In step S101, a mobile switching center (MSC) transparently transmits a narrowband call request to the narrowband service module of a service control point (SCP) through a signaling interface unit (SILT). In step S102, the MSC receives and analyzes an ETC message of an announcement playback auxiliary route returned by the SCP. In step S103, in response to the ETC message carrying information indicating that the narrowband announcement playback over the IP network is required, the MSC converts the ETC message into a Session Initiation Protocol (SIP) request message. In step S104, the MSC directly sends the SIP request message to the broadband service module of the SCP, the broadband service module establishes an association with the narrowband service module of the SCP according to the SIP request message, and the broadband service module controls, through the broadband protocol adaptation module of the SCP, a media server to play back an announcement.

In one solution, step S 102 includes that the MSC receives the ETC message transparently transmitted by the SCP through the SIU; analyzes a called number carried in the ETC message and determines whether the called number carries a prefix feature indicating that the narrowband announcement playback over the IP network is required; and in response to the called number carrying the prefix feature, determines that the ETC message carries the information indicating that the narrowband announcement playback over the IP network is required.

In one solution, step S 104 includes that the MSC sends the SIP request message to the broadband protocol adaptation module of the SCP, and the broadband protocol adaptation module sends the SIP request message to the broadband service module of the SCP through an internal message.

In one solution, after step S101, the method further includes that the narrowband service module of the SCP assembles a called number according to a service processing requirement and writes the assembled number into the ETC. The service processing requirement is a service requirement of an intelligent service subscribed by a user initiating the narrowband call request. Parameters of the called number include a prefix and a narrowband association ID. The prefix is information about the narrowband announcement playback over an IP network. The narrowband association ID is used for association processing between a broadband service and a narrowband service inside the SCP.

In one solution, the SIP request message carries a called number, and after step S104, the method further includes that the broadband service module analyzes the called number; in response to the called number carries the information indicating that the narrowband announcement playback over the IP network is required, the broadband service module acquires a narrowband association ID in the called number; and the broadband service module invokes the narrowband protocol adaptation module of the SCP according to the narrowband association ID, and the broadband service module establishes an association with the narrowband service module of the SCP through the narrowband protocol adaptation module.

In practical application, after the broadband service module establishes an association with the narrowband service module, if the narrowband service module receives a subsequent request for prompting an announcement and collecting user information after the call request, the narrowband service module sends the request for prompting an announcement and collecting user information to the broadband service module instead of the MSC core network.

In one solution, the operation of controlling, through the broadband protocol adaptation module of the SCP, the media server to play back the announcement includes that the broadband service module calls the media server through the broadband protocol adaptation module to cause the media server to complete a bidirectional media negotiation with a caller of the MSC; the broadband service module sends a message to the narrowband protocol adaptation module through the broadband protocol adaptation module to notify that the narrowband service module is ready to play back the announcement; in response to the narrowband service module receiving a subsequent request for prompting an announcement and collecting user information after the call request, an internal interface of the narrowband protocol adaptation module is invoked to play the announcement (PA) or to prompt an announcement and collect the user information (PC); the narrowband protocol adaptation module invokes the internal interface to notify the broadband protocol adaptation module to play back the announcement or prompt and collect the user information; the broadband protocol adaptation module notifies, through an internal interface, the broadband service module to play back the announcement or prompt and collect the user information; and the broadband service module interacts with the media server to complete playing back the announcement; or prompting the announcement and collecting the user information.

In the method for narrowband service announcement playback over the IP network of this embodiment, when receiving the ETC message carrying the information about the narrowband announcement playback over the IP network, the MSC converts the ETC message into an SIP request message and directly sends the SIP request message to the broadband service module of the SCP. Announcement playback through an independent IP is not required. A broadband media server having higher performance is used to play back a narrowband announcement. In this manner, the complexity of the system is reduced, the maintainability is increased, and thus the purpose of responding to the needs of a customer quickly and well can be achieved. Moreover, a broadband media server is used to play back a narrowband announcement so that connection through an E1 line is avoided in terms of hardware and over the IP network in the entire network is achieved.

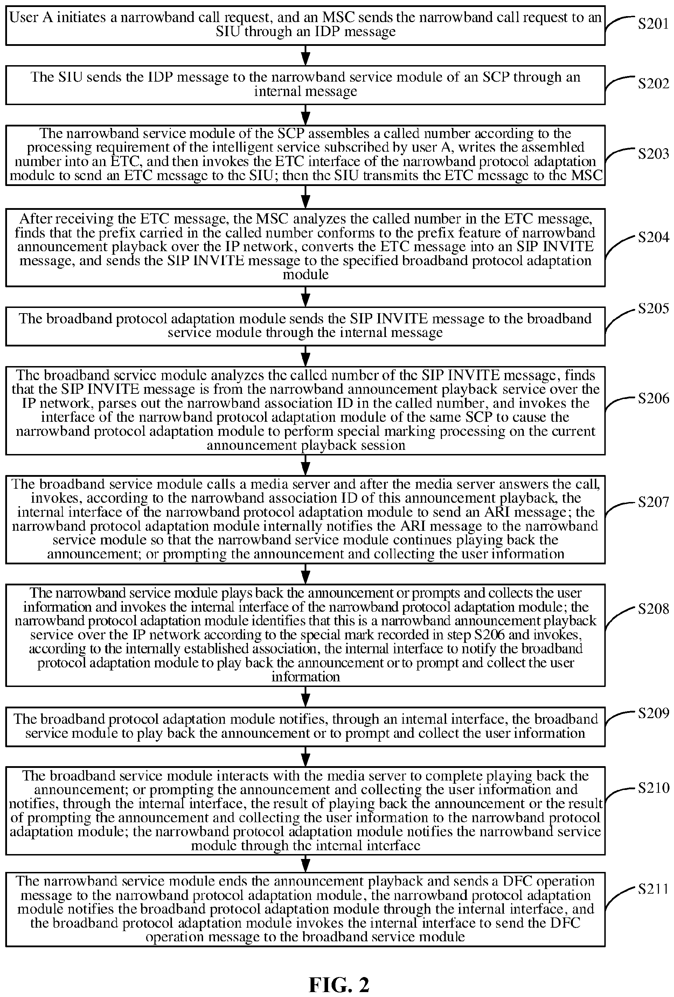

Based on the preceding embodiment, another embodiment of the present application provides another method for narrowband service announcement playback over the IP network. It is to be noted that in this embodiment, the narrowband service module, the broadband service module, the narrowband protocol adaptation module, and the broadband protocol adaptation module are all disposed in the same SCP. Referring to FIG. 2, the process of the method includes the steps below.

In step S201, user A initiates a narrowband call request, and an MSC sends the narrowband call request to an SIU through an initial detection point (IDP) message.

In this embodiment, user A subscribes to an intelligent service. The intelligent service supports narrowband announcement playback over the IP network.

In step S202, the SIU sends the IDP message to the narrowband service module of an SCP through an internal message.

In step S203, the narrowband service module of the SCP assembles a called number according to the processing requirement of the intelligent service subscribed by user A, writes the assembled number into an ETC, and then invokes the ETC interface of the narrowband protocol adaptation module to send an ETC message to the SILT; then the SIU transmits the ETC message to the MSC.

In one embodiment, the format of the assembled number is: PREFIX (prefix) + SCPID + association call ID. The PREFIX is used by the MSC to identify narrowband service announcement playback over the IP network. The SCPID is used for allocation of an SIP message in a multi-SCP environment, ensuring that the SIP message is allocated to and processed on a correct SCP. As the module identifier of the server where the narrowband service is located, the SCPID is a non-mandatory parameter.

The narrowband session narrowband association ID is used for association processing between a broadband service module and the narrowband service module in the SCP.

In step S204, after receiving the ETC message, the MSC analyzes the called number in the ETC message, finds that the prefix carried in the called number conforms to the prefix feature of narrowband announcement playback over the IP network, converts the ETC message into an SIP INVITE message, and directly sends the SIP INVITE message to the specified broadband protocol adaptation module.

In one embodiment, the specified broadband protocol adaptation module refers to a broadband protocol adaptation module of the SCP corresponding to an SCP ID in a multi-SCP environment.

In one embodiment, the format of the called number in the SIP INVITE message is the same as the format of the called number carried in the ETC message. Moreover, the SIP INVITE message further carries the media description information SDP-CALLER of a caller.

In this step, the SIP INVITE message sent by the MSC is directly sent to the broadband protocol adaptation module of the SCP without being transparently transmitted through the SILT.

In step S205, the broadband protocol adaptation module sends the SIP INVITE message to the broadband service module through the internal message.

In step S206, the broadband service module analyzes the called number of the SIP INVITE message, finds that the SIP INVITE message is from the narrowband announcement playback service over the IP network, parses out the narrowband association ID in the called number, and invokes the interface of the narrowband protocol adaptation module of the same SCP to cause the narrowband protocol adaptation module to perform special marking processing on the current announcement playback session.

In one embodiment, through this step, it is possible to notify that this announcement playback service is an announcement playback service of narrowband announcement playback over the IP network. The narrowband protocol adaptation module performs special marking processing on the current announcement playback session. Subsequent requests for this announcement playback session need to be forwarded to the corresponding broadband protocol adaptation module.

In step S207, the broadband service module calls a media server (MEDIASERVER) and after the media server answers the call, invokes, according to the narrowband association ID of this announcement playback, the internal interface of the narrowband protocol adaptation module to send an ARI message; the narrowband protocol adaptation module internally notifies the ARI message to the narrowband service module so that the narrowband service module continues playing back the announcement; or prompting the announcement and collecting the user information.

In this step, the broadband announcement playback service controls the broadband protocol module to send an SIP 180RING, 183 PROCESSING or 200OK message to the MSC. The message needs to carry the media description information SDP-MS of the media server.

In step S208, the narrowband service module plays back the announcement or prompts and collects the user information and invokes the internal interface of the narrowband protocol adaptation module; the narrowband protocol adaptation module identifies that this is a narrowband announcement playback service over the IP network according to the special mark recorded in step S206 and invokes, according to the internally established association, the internal interface to notify the broadband protocol adaptation module to play back the announcement or to prompt and collect the user information.

In step S209, the broadband protocol adaptation module notifies, through an internal interface, the broadband service module to play back the announcement or to prompt and collect the user information.

In step S210, the broadband service module interacts with the media server to complete playing back the announcement; or prompting the announcement and collecting the user information and notifies, through the internal interface, the result of playing back the announcement or the result of prompting the announcement and collecting the user information to the narrowband protocol adaptation module; the narrowband protocol adaptation module notifies the narrowband service module through the internal interface.

In step S211, the narrowband service module ends the announcement playback and sends a Disconnect Forward Connection (DFC) operation message to the narrowband protocol adaptation module, the narrowband protocol adaptation module notifies the broadband protocol adaptation module through the internal interface, and the broadband protocol adaptation module invokes the internal interface to send the DFC operation message to the broadband service module.

In practical application, after receiving the DFC operation message, the broadband service module sends a BYE message to the media server to end the session with the media server and also sends a CANCEL or BYE message to the MSC. If the SDP of the media server is carried in 180 or 183, the broadband service module sends the CANCEL message to the MSC. If the SDP of the media server is carried in 200OK, the broadband service module sends the BYE message to the MSC. At this point, the SIP call generated by the MSC has been released after the operation of playing back the announcement or the operation of prompting the announcement and collecting the user information is completed.

In the method for narrowband service announcement playback over the IP network of this embodiment, when receiving the ETC message carrying the information about the narrowband announcement playback over the IP network, the MSC converts the ETC message into a SIP request message and directly sends the SIP request message to the broadband service module of the SCP. Announcement playback through an independent IP is not required. A broadband media server having higher performance is used to play back a narrowband announcement. In this manner, the complexity of the system is reduced, the maintainability is increased, and thus the purpose of responding to the needs of a customer quickly and well can be achieved. Moreover, a broadband media server is used to play back a narrowband announcement so that connection through an E1 line is avoided in terms of hardware and over the IP network in the entire network is achieved.

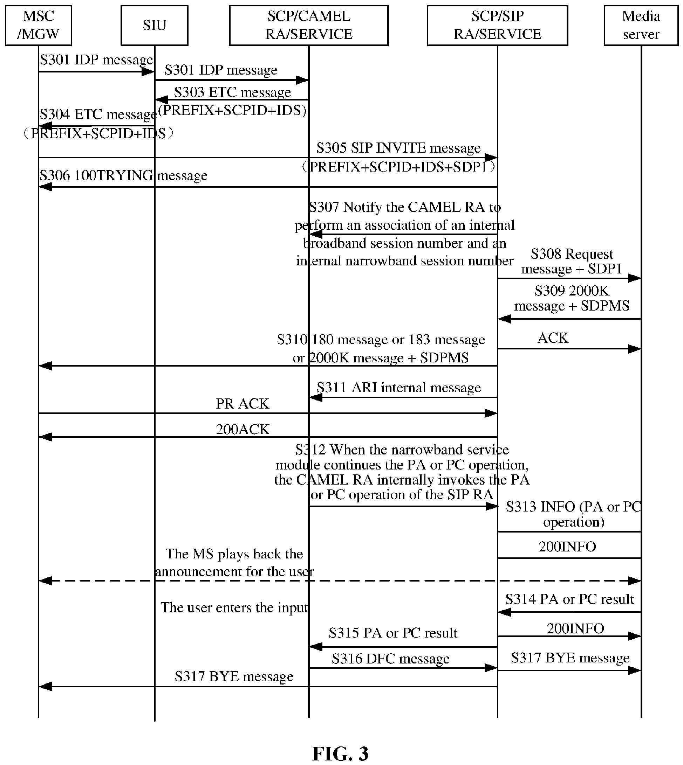

Based on the preceding embodiment, embodiment three of the present application provides another method for narrowband service announcement playback over the IP network. It is to be noted that in this embodiment, the narrowband protocol adapter, the broadband protocol adapter, the narrowband service module and the broadband service module are all disposed in the same SCP. Referring to FIG. 3, the signaling diagram of the method includes the steps below.

In step S301, after receiving a narrowband call request initiated by user A, an MSC sends an IDP message to an SIU.

In step S302, the SIU sends the IDP message to a CAMEL RA (narrowband protocol adapter).

In this step, the SIU triggers the CAMEL RA through the internal IDP message.

In step S303, the CAMEL RA triggers a narrowband service module through the internal message; the narrowband service module identifies that the narrowband call request requires announcement playback over the IP network and sends an ETC message to the SIU.

In this step, the routing code in the ETC is PREFIX + SCPID + narrowband association ID. The PREFIX is a call prefix. The SCPID is the identifier of an SCP. The narrowband association ID is the narrowband association ID of the current narrowband session.

In step S304, the SIU transparently transmits the ETC message to the MSC.

In step S305, the MSC sends an SIP INVITE message to a broadband protocol adapter SIP RA.

In one embodiment, after receiving the ETC message, the MSC makes an analysis according to the special routing code, prefix, in the ETC message and sends the SIP INVITE message. The called number in the INVITE message is PREFIX + SCPID + narrowband association ID (IDS). The SIP INVITE message is configured to be sent to the SIP RA of the SCP.

The SIP INVITE further carries the media description information SDP1.

In step S306, the SIP RA returns a 100TRYING message to the MSC and triggers the broadband announcement playback service of a broadband service module.

In this step, the 100TRYING message indicates that the INVITE message has been received.

In step S307, the broadband service module controls the SIP RA to perform association recording according to the narrowband association ID in the INVITE and the broadband session ID of the current call and notifies the CAMEL RA to perform an association of an internal broadband session number and an internal narrowband session number.

In step S308, the broadband service module controls the SIP RA to send an INVITE call request to the media server and carries the media description information SDP1 of the incoming INVITE call.

In step S309, the media server answers the 200OK message to the SIP RA and carries the media information SDPMS of the media server.

In step S310, the SIP RA brings the media information SDPMS of the media server to the MSC through the 180 message, the 183 message or the 200OK message.

In step S310, a caller of the MSC and the media server complete a bidirectional media negotiation.

In step S311, the broadband service module discovers an Assist Request Instructions (ARI) internal message to CAMEL RA through SIP RA, and the CAMEL RA notifies the ARI message to the narrowband service to notify that the announcement playback is ready.

In step S312, after receiving the ARI message, the narrowband service module continues playing back the announcement; or prompting the announcement and collecting the user information; after receiving the operation of playing back the announcement or the operation of prompting the announcement and collecting the user information of the narrowband service, the CAMEL RA finds, according to the internal record, that the operation is an operation of announcement playback service over the IP network; the session of the SIP RA is found according to the internally established association, and the operation of playing back the announcement or the operation of prompting the announcement and collecting the user information of the SIP RA is invoked internally and directly.

In step S313, the SIP RA receives the operation of playing back the announcement or the operation of prompting the announcement and collecting the user information of the CAMEL RA and notifies the broadband service module; the broadband service module invokes a broadband PAPC interface of the SIP RA to send a message about playing back the announcement or a message about prompting the announcement and collecting the user information to indirectly control the media server to play back the announcement or prompt and collect the user information.

In step S314, the media server plays back the announcement or prompts and collects the user information and reports the result of playing back the announcement or the result of prompting the announcement and collecting the user information to the SIP RA when the announcement playback is completed or the user's key input is received; the SIP RA reports the result to the broadband service module.

In step S315, the broadband service module invokes an internal interface provided by the CAMEL RA to notify the result of playing back the announcement or the result of prompting the announcement and collecting the user information to the CAMEL RA; after receiving the result from the SIP RA, the CAMEL RA notifies the result to the narrowband announcement playback service.

At this point, the narrowband playback service completes the process from an ETC link announcement playback device to transmission of an indication about playing back the announcement or about prompting the announcement and collecting the user information and, finally, to reception of the result of playing back the announcement or the result of prompting the announcement and collecting the user information. In practical application, it is possible to complete playing back the announcement; or prompting the announcement and collecting the user information by the broadband media server without paying much attention to the narrowband service. The implementation process is relatively simple.

In practical application, the narrowband service module may continuously play back the announcement or may continuously prompt and collect the user information during one session.

In step S316, after completing playing back the announcement; or prompting the announcement and collecting the user information, the narrowband announcement playback service sends a DFC message to the SIP RA to disconnect from the announcement playback device.

In one embodiment, the CAMEL RA invokes the interface of the SIP RA to notify the SIP RA to end the announcement playback.

In step S317, after receiving the DFC message, the SIP RA notifies the broadband service module, and the broadband service module sends a BYE message to disconnect from the media server.

In step S318, the broadband service module sends a CANCEL or BYE message to the MSC to end the SIP session of the MSC.

In the method for narrowband service announcement playback over the IP network of this embodiment, when receiving the ETC message carrying the information about the narrowband announcement playback over the IP network, the MSC converts the ETC message into a SIP request message and directly sends the SIP request message to the broadband service module of the SCP. Announcement playback through an independent IP is not required. A broadband media server having higher performance is used to play back a narrowband announcement. In this manner, the complexity of the system is reduced, the maintainability is increased, and thus the purpose of responding to the needs of a customer quickly and well can be achieved. Moreover, a broadband media server is used to play back a narrowband announcement so that connection through an E1 line is avoided in terms of hardware and over the IP network in the entire network is achieved.

Based on the preceding embodiment, embodiment four of the present application provides a system for narrowband service announcement playback over the IP network. Referring to FIG. 4, the system includes an MSC, an SCP, an SIU, and a MEDIASERVER (media server) and may further include a media gateway (MGW).

The MSC has the capability of an SIP interface. The MSC serves as a service switching point (SSP) to trigger a narrowband call request to the SIU; serves to convert a narrowband announcement playback auxiliary routing message into an SIP message and trigger the SCP; and serves to perform conversion between narrowband announcement playback and the broadband SIP from the perspective of a core network.

In one embodiment, the MSC includes a memory, a processor, and a computer program stored in the memory and executable by the processor. The processor performs the following steps when executing the computer program: The mobile switching center (MSC) transparently transmits a narrowband call request to the narrowband service module of the service control point (SCP) through the signaling interface unit (SIU); the MSC receives and analyzes an ETC message of an announcement playback auxiliary route returned by the SCP; in response to the ETC message carrying information indicating that the narrowband announcement playback over the IP network is required, the MSC converts the ETC message into a Session Initiation Protocol (SIP) request message; and the MSC directly sends the SIP request message to the broadband service module of the SCP, the broadband service module establishes an association with the narrowband service module of the SCP according to the SIP request message, and the broadband service module controls, through the broadband protocol adaptation module of the SCP, a media server to play back an announcement.

In one solution, when the step "the MSC receives and analyzes the ETC message of the announcement playback auxiliary route returned by the SCP" is performed, the processor performs the following steps when executing the computer program: The MSC receives the ETC message transparently transmitted by the SCP through the SIU; analyzes a called number carried in the ETC message and determines whether the called number carries a prefix feature indicating that the narrowband announcement playback over the IP network is required; and in response to the called number carrying the prefix feature, determines that the ETC message carries the information indicating that the narrowband announcement playback over the IP network is required.

In one solution, when the step "the MSC sends the SIP request message to the broadband service module of the SCP" is performed, the processor performs the following steps when executing the computer program: The MSC sends the SIP request message to the broadband protocol adaptation module of the SCP, and the broadband protocol adaptation module sends the SIP request message to the broadband service module of the SCP through an internal message.

The SCP includes a memory, a processor, and a computer program stored in the memory and executable by the processor. After the step "the mobile switching center (MSC) transparently transmits the narrowband call request to the narrowband service module of the service control point (SCP) through the signaling interface unit (SIU)", the processor performs the following steps when executing the computer program: The narrowband service module of the SCP assembles a called number according to a service processing requirement, and the narrowband service module of the SCP writes the assembled number into the ETC. The service processing requirement is a service requirement of an intelligent service subscribed by a user initiating the narrowband call request. Parameters of the called number include a prefix and a narrowband association ID. The prefix is the information about the narrowband announcement playback over the IP network. The narrowband association ID is used for association processing between a broadband service and a narrowband service inside the SCP.

In one solution, after the step "the SIP request message carries the called number, and the MSC transparently transmits the SIP request message to the broadband service module of the SCP", the processor performs the following steps when executing the computer program: The broadband service module analyzes the called number; in response to the called number carries the information indicating that the narrowband announcement playback over the IP network is required, the broadband service module acquires a narrowband association ID in the called number; and the broadband service module invokes the narrowband protocol adaptation module of the SCP according to the narrowband association ID, and the broadband service module establishes an association with the narrowband service module of the SCP through the narrowband protocol adaptation module.

In one solution, after the step "controls, through the broadband protocol adaptation module of the SCP, the media server to play back the announcement", the processor performs the following steps when executing the computer program: The broadband service module calls the media server through the broadband protocol adaptation module to cause the media server to complete a bidirectional media negotiation with a caller of the MSC; the broadband service module sends a message to the narrowband protocol adaptation module through the broadband protocol adaptation module to notify that the narrowband service module is ready to play back the announcement; in response to the narrowband service module receiving a subsequent request for prompting an announcement and collecting user information after the call request, an internal interface of the narrowband protocol adaptation module is invoked to play back the announcement or prompt and collect the user information; the narrowband protocol adaptation module invokes the internal interface to notify the broadband protocol adaptation module to play back the announcement or prompt and collect the user information; the broadband protocol adaptation module notifies, through an internal interface, the broadband service module to play back the announcement or prompt and collect the user information; and the broadband service module interacts with the media server to complete playing back the announcement; or prompting the announcement and collecting the user information.

In this embodiment, the SCP is a protocol adaptation layer, and the processor of the SCP may include a narrowband protocol adaptation module, a broadband protocol adaptation module, a narrowband service module (corresponding to a narrowband announcement playback service), and a broadband service module (corresponding to a broadband announcement playback service).

The narrowband protocol adaptation module and the broadband protocol adaptation module interact with each other through an internal message. The narrowband protocol adaptation module needs to identify, according to the interaction with the broadband service module, whether the narrowband service announcement playback is a common narrowband announcement playback or a narrowband announcement playback over the IP network.

The broadband service module can analyze the composition of the called number, identify whether the current request is a request for narrowband announcement playback over the IP network, analyze the narrowband association ID, and invoke the interface of the narrowband protocol adaptation module to notify that the current announcement playback is a narrowband announcement playback over the IP network.

The narrowband protocol adaptation module needs to forward the request for the narrowband announcement playback service to the broadband protocol adaptation module after being notified that the announcement playback is a narrowband announcement playback over the IP network.

The SIU is used for transparently transmitting the narrowband call request received by the MSC to the SCP.

The media server is disposed in the broadband domain. The media server is used for playing back an announcement under the control of the SCP and performing operations such as playing back an announcement; or prompting the announcement and collecting user information.

The MGW is used for interconnection between a user media plane in the narrowband domain and the media server in the broadband domain.

In practical application, the preceding system may, but not necessarily, be implemented based on the JAIN SLEE container open architecture. JAIN SLEE is an event-driven middleware that employs an SBB message mechanism to reduce latency in transaction processing. JAIN SLEE operates in the following manner: JAIN SLEE scans event states from external protocol resources and then submits these events to various processing units. Multiple devices including gateways and gatekeepers, application servers, and media servers may be designed based on JAIN SLEE that is adaptable to multiple switching protocols at the same time. In the JAIN SLEE architecture, different network entities may be interconnected by different resource adaptors (RAs). For example, an SIP RA is invoked for a broadband intelligent network service, an INAP RA is invoked for a fixed intelligent network service, and a CAP RA is invoked for a Global System for Mobile Communications (GSM) service. Different RAs are adapted to different Internet Protocols (IPs). Interfaces of all RAs are open to the outside.

In the system for narrowband service announcement playback over the IP network of this embodiment, when receiving the ETC message carrying the information about the narrowband announcement playback over the IP network, the MSC converts the ETC message into a SIP request message and directly sends the SIP request message to the broadband service module of the SCP. Announcement playback through an independent IP is not required. A broadband media server having higher performance is used to play back a narrowband announcement. In this manner, the complexity of the system is reduced, the maintainability is increased, and thus the purpose of responding to the needs of a customer quickly and well can be achieved. Moreover, a broadband media server is used to play back a narrowband announcement so that connection through an E1 line is avoided in terms of hardware, major changes are not required in a narrowband service, and over the IP network in the entire network is achieved.

Based on the preceding embodiment, embodiment four of the present application provides a storage medium. The storage medium contains a stored program. When executed, the program controls the device on which the storage medium is located to perform operations of embodiment one, two or three.

It is to be understood by those having ordinary skill in the art that some or all steps of the preceding method and function modules/units in the preceding system or device may be implemented as software, firmware, hardware and suitable combinations thereof. In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed over computer-readable media. The computer-readable media may include computer storage media (or non-transitory media) and communication media (or transitory media). As is known to those having ordinary skill in the art, the term computer storage media include volatile and non-volatile as well as removable and non-removable media implemented in any method or technology for storing information (such as computer-readable instructions, data structures, program modules or other data). The storage media include, but are not limited to, a RAM, a ROM, an EEPROM, a flash memory or other memory technologies, a CD-ROM, a DVD or other optical storages, a magnetic cassette, a magnetic tape, a magnetic disk or other magnetic storage devices, or any other medium that can be used for storing desired information and that can be accessed by a computer. Moreover, as is known to those having ordinary skill in the art, communication media generally include computer-readable instructions, data structures, program modules, or other data in carriers or in modulated data signals transported in other transport mechanisms and may include any information delivery medium.

In the method, apparatus and system for narrowband service announcement playback over the IP network and the storage medium of the embodiments herein, when receiving the ETC message carrying the information about the narrowband announcement playback over the IP network, the MSC converts the ETC message into a SIP request message and directly sends the SIP request message to the broadband service module of the SCP. Announcement playback through an independent IP is not required. A broadband media server having higher performance is used to play back a narrowband announcement. In this manner, the complexity of the system is reduced, the maintainability is increased, and thus the purpose of responding to the needs of a customer quickly and well can be achieved. Moreover, a broadband media server is used to play back a narrowband announcement so that connection through an E1 line is avoided in terms of hardware and over the IP network in the entire network is achieved. With the embodiments herein, narrowband service announcement playback over the IP network is achieved.

## Claims

1. A method for narrowband service announcement playback over an IP network, comprising:
transparently transmitting (S101), by a mobile switching center, MSC, a narrowband call request to a narrowband service module of a service control point, SCP, through a signaling interface unit, SILT;
receiving (S102) and analyzing, by the MSC, an establishing temporary connection, ETC, message of an announcement playback auxiliary route returned by the SCP;
in response to the ETC message carrying information indicating that narrowband announcement playback over the IP network is required, converting (S103), by the MSC, the ETC message into a Session Initiation Protocol, SIP, request message; and
sending directly (S 104), by the MSC, the SIP request message to a broadband service module of the SCP, establishing, by the broadband service module, an association with the narrowband service module of the SCP according to the SIP request message, and controlling, by the broadband service module through a broadband protocol adaptation module of the SCP, a media server to play back an announcement.

2. The method for narrowband service announcement playback over the IP network of claim 1, wherein receiving (S102) and analyzing, by the MSC, the ETC message of the announcement playback auxiliary route returned by the SCP comprises:
receiving, by the MSC, the ETC message transparently transmitted by the SCP through the SILT;
analyzing a called number carried in the ETC message and determining whether the called number carries a prefix feature indicating that the narrowband announcement playback over the IP network is required; and
in response to the called number carrying the prefix feature, determining that the ETC message carries the information indicating that the narrowband announcement playback over the IP network is required.

3. The method for narrowband service announcement playback over the IP network of claim 1, wherein sending, by the MSC, the SIP request message to the broadband service module of the SCP comprises:
sending, by the MSC, the SIP request message to the broadband protocol adaptation module of the SCP, and sending, by the broadband protocol adaptation module, the SIP request message to the broadband service module of the SCP through an internal message.

4. The method for narrowband service announcement playback over the IP network of claim 1, after transparently transmitting (S101), by the MSC, the narrowband call request to the narrowband service module of the SCP through the SIU, the method further comprising:
assembling, by the narrowband service module of the SCP, a called number according to a service processing requirement, and writing, by the narrowband service module of the SCP, the assembled number into the ETC, wherein
the service processing requirement is a service requirement of an intelligent service subscribed by a user initiating the narrowband call request, and parameters of the called number comprise a prefix and a narrowband association identity, ID, wherein the prefix is information indicating that the narrowband announcement playback over the IP network is required, and the narrowband association ID is used for association processing between a broadband service and a narrowband service inside the SCP.

5. The method for narrowband service announcement playback over the IP network of claim 1, wherein the SIP request message carries a called number, and after sending, by the MSC, the SIP request message to the broadband service module of the SCP, the method further comprises:
analyzing, by the broadband service module, the called number;
in response to the called number carrying the information indicating that the narrowband announcement playback over the IP network is required, acquiring, by the broadband service module, a narrowband association ID in the called number; and
invoking, by the broadband service module, a narrowband protocol adaptation module of the SCP according to the narrowband association ID, and establishing, by the broadband service module, the association with the narrowband service module of the SCP through the narrowband protocol adaptation module.

6. The method for narrowband service announcement playback over the IP network of claim 1, wherein controlling, through the broadband protocol adaptation module of the SCP, the media server to play back the announcement comprises:
calling, by the broadband service module, the media server through the broadband protocol adaptation module to cause the media server to complete a bidirectional media negotiation with a caller of the MSC;
sending, by the broadband service module, a message to the narrowband protocol adaptation module through the broadband protocol adaptation module to notify that the narrowband service module is ready to play back the announcement;
in response to the narrowband service module receiving a subsequent request for prompting an announcement and collecting user information after the call request, invoking an internal interface of the narrowband protocol adaptation module to play back the announcement or prompt and collect the user information;
invoking, by the narrowband protocol adaptation module, the internal interface to notify the broadband protocol adaptation module to play back the announcement or to prompt and collect the user information;
notifying, by the broadband protocol adaptation module through an internal interface, the broadband service module to play back the announcement or to prompt and collect the user information; and
interacting, by the broadband service module, with the media server to complete playing back the announcement or to complete prompting the announcement and collecting the user information.

7. A system for narrowband service announcement playback over an IP network, comprising a mobile switching center, MSC, a service control point, SCP, a signaling interface unit, SIU, and a media server, wherein the system is adapted to perform the method of any one of claims 1 to 6.

8. A storage medium, the storage medium storing one or more programs executable by one or more processors, which when executed on a system according to claim 7 cause the system to perform the method of any one of claims 1 to 6.

## Patentansprüche

1. Verfahren zur schmalbandigen Dienstankündigungswiedergabe über ein IP-Netzwerk, umfassend:
transparentes Übertragen (S101) einer Schmalbandanrufanforderung durch eine Mobilvermittlungsstelle MSC an ein Schmalband-Dienstmodul einer Dienstesteuerungsstelle SCP über eine Signalisierungsschnittstelleneinheit SIU;
Empfangen (S102) und Analysieren einer Nachricht zum Aufbau einer temporären Verbindung ETC mit einer Hilfsroute für die Ankündigungswiedergabe, die vom SCP zurückgegeben wird, durch die MSC;
als Reaktion auf die ETC-Nachricht, die Informationen mit der Angabe trägt, dass eine schmalbandige Ankündigungswiedergabe über das IP-Netzwerk erforderlich ist, Umwandeln (S103) der ETC-Nachricht durch die MSC in eine Anforderungsnachricht für ein Sitzungsinitiierungsprotokoll SIP; und
Direktes Senden (S104) der SIP-Anforderungsnachricht durch die MSC an ein Breitband-Dienstmodul des SCP, Herstellen einer Zuordnung durch das Breitband-Dienstmodul zu dem Schmalband-Dienstmodul des SCP gemäß der SIP-Anforderungsnachricht durch das Breitband-Dienstmodul und Steuern eines Medienservers durch das Breitband-Dienstmodul durch ein Breitband-Protokoll-Anpassungsmodul des SCP zum Abspielen einer Ankündigung.

2. Verfahren zur schmalbandigen Dienstankündigungswiedergabe über ein IP-Netzwerk gemäß Anspruch 1, wobei das Empfangen (S102) und Analysieren der ETC-Nachricht der Ankündigungswiedergabe-Hilfsroute durch die MSC, welche vom SCP zurückgegeben wird, umfasst:
Empfangen der vom SCP transparent über die SIU übertragenen ETC-Nachricht durch die MSC.
Analysieren einer Rufnummer, die in der ETC-Nachricht mitgeführt wird, und Bestimmen, ob die Rufnummer ein Präfix-Merkmal aufweist, das angibt, dass die schmalbandige Ansagewiedergabe über das IP-Netzwerk erforderlich ist; und
als Reaktion auf die angerufene Nummer, die das Präfix-Merkmal trägt, Bestimmen, dass die ETC-Nachricht die Information trägt, dass die schmalbandige Ansage-Wiedergabe über das IP-Netzwerk erforderlich ist.

3. Verfahren zur schmalbandigen Dienstankündigungswiedergabe über das IP-Netzwerk nach Anspruch 1, wobei das Senden, durch die MSC, der SIP-Anforderungsnachricht an das Breitband-Dienstmodul des SCP umfasst:
Senden der SIP-Anforderungsnachricht durch die MSC an das Breitband-Protokoll-Anpassungsmodul des SCP und Senden der SIP-Anforderungsnachricht durch das Breitband-Protokoll-Anpassungsmodul an das Breitband-Dienstmodul des SCP mittels einer internen Nachricht.

4. Verfahren zur Schmalband-Dienstankündigungswiedergabe über das IP-Netzwerk nach Anspruch 1, nach transparenter Übertragung (S101), durch die MSC, der Schmalband-Rufanforderung an das Schmalband-Dienstmodul des SCP durch die SIU, wobei das Verfahren ferner Folgendes umfasst:
Zusammenstellen, durch das Schmalband-Dienstmodul des SCP, einer gerufenen Nummer gemäß einer Dienstverarbeitungsanforderung, und Einschreiben, durch das Schmalband-Dienstmodul des SCP, der zusammengesetzten Nummer in das ETC, wobei
die Dienstverarbeitungsanforderung ist eine Dienstanforderung eines intelligenten Dienstes, der von einem Benutzer abonniert wird, der die Schmalbandanrufanforderung initiiert, und Parameter der gerufenen Nummer umfassen ein Präfix und eine Schmalbandzuordnungsidentitätskennung, wobei das Präfix eine Information darstellt, die angibt, dass die Schmalbandankündigungswiedergabe über das IP-Netzwerk erforderlich ist, und die Schmalbandzuordnungs-ID zur Zuordnungsverarbeitung zwischen einem Breitbanddienst und einem Schmalbanddienst innerhalb des SCP verwendet wird.

5. Verfahren zur schmalbandigen Dienstankündigungswiedergabe über das IP-Netzwerk nach Anspruch 1, wobei die SIP-Anforderungsnachricht eine gerufene Nummer trägt, und nachdem die SIP-Anforderungsnachricht durch die MSC an das Breitband-Dienstmodul des SCP gesendet wurde, umfasst das Verfahren ferner:
Analysieren der gerufenen Nummer durch das Breitbanddienstmodul; als Reaktion auf die Rufnummer, die die Information trägt, dass die Wiedergabe der Schmalbandansage über das IP-Netz erforderlich ist, durch das Breitbanddienstmodul eine Schmalbandzuordnungs-ID in der Rufnummer zu erlangen; und
Aufrufen, durch das Breitbanddienstmodul, eines Schmalbandprotokoll-Anpassungsmoduls des SCP gemäß der Schmalbandzuordnungs-ID und Herstellen, durch das Breitbanddienstmodul, der Zuordnung zu dem Schmalbanddienstmodul des SCP durch das Schmalbandprotokoll-Anpassungsmodul.

6. Verfahren zur schmalbandigen Dienstankündigungswiedergabe über das IP-Netzwerk nach Anspruch 1, wobei das Steuern des Medienservers über das Breitband-Protokoll-Anpassungsmodul des SCP zum Abspielen der Ankündigung Folgendes umfasst:
Aufrufen, durch das Breitbanddienstmodul, des Medienservers durch das Breitbandprotokollanpassungsmodul, um den Medienserver zu veranlassen, eine bidirektionale Medienverhandlung mit einem Anrufer der MSC abzuschließen;
Senden, durch das Breitbanddienstmodul, einer Nachricht an das Schmalbandprotokoll-Anpassungsmodul durch das Breitbandprotokoll-Anpassungsmodul, um zu benachrichtigen, dass das Schmalbanddienstmodul bereit ist, die Ankündigung wiederzugeben;
in Reaktion darauf, dass das Schmalbanddienstmodul eine nachfolgende Anforderung zum Auffordern einer Ankündigung und zum Sammeln von Benutzerinformationen nach der Anrufanforderung empfängt, Aufrufen einer internen Schnittstelle des Schmalbandprotokollanpassungsmoduls zum Abspielen der Ankündigung oder Auffordern und Sammeln der Benutzerinformationen;
Aufrufen, durch das Schmalbandprotokoll-Anpassungsmodul, der internen Schnittstelle, um das Breitbandprotokoll-Anpassungsmodul zu benachrichtigen, die Ankündigung wiederzugeben, oder um die Benutzerinformationen anzufordern und zu sammeln;
das Breitband-Dienstmodul durch das BreitbandProtokollanpassungsmodul über eine interne Schnittstelle benachrichtigt wird, die Ankündigung wiederzugeben oder die Benutzerinformationen anzufordern und zu sammeln; und
Interaktion, durch das Breitbanddienstmodul, mit dem Medienserver, um die Wiedergabe der Ankündigung abzuschließen oder um die Ankündigung abzuschließen und die Benutzerinformationen zu sammeln.

7. System zur schmalbandigen Dienstankündigungswiedergabe über ein IP-Netzwerk, umfassend eine mobile Vermittlungsstelle, MSC, einen Dienststeuerungspunkt, SCP, eine Signalisierungsschnittstelleneinheit, SIU und einen Medienserver, wobei das System dazu eingerichtet ist, das Verfahren nach einem der Ansprüche 1 bis 6 auszuführen.

8. Speichermedium, wobei das Speichermedium ein oder mehrere von einem oder mehreren Prozessoren ausführbare Programme speichert, die, wenn sie auf einem System nach Anspruch 7 ausgeführt werden, das System veranlassen, das Verfahren nach einem der Ansprüche 1 bis 6 auszuführen.

## Revendications

1. Procédé de lecture d'annonce de service à bande étroite sur un réseau IP, comprenant :
la transmission transparente (S101), par un centre de commutation mobile, MSC, d'une demande d'appel à bande étroite à un module de service à bande étroite d'un point de commande de service, SCP, par l'intermédiaire d'une unité d'interface de signalisation, SIU ;
la réception (S102) et l'analyse, par le MSC, d'un message d'établissement de connexion temporaire, ETC, d'une voie auxiliaire de lecture d'annonce renvoyé par le SCP ;
en réponse au fait que le message ETC transporte des informations indiquant que la lecture d'annonce à bande étroite sur le réseau IP est requise, la conversion (S103), par le MSC, du message ETC en un message de demande de protocole d'initiation de session, SIP ; et
l'envoi direct (S104), par le MSC, du message de demande SIP à un module de service à large bande du SCP, l'établissement, par le module de service à large bande, d'une association avec le module de service à bande étroite du SCP selon le message de demande SIP, et la commande, par le module de service à large bande par l'intermédiaire d'un module d'adaptation de protocole à large bande du SCP, d'un serveur multimédia pour lire une annonce.

2. Procédé de lecture d'annonce de service à bande étroite sur le réseau IP selon la revendication 1, dans lequel la réception (S102) et l'analyse, par le MSC, du message ETC de la voie auxiliaire de lecture d'annonce renvoyé par le SCP comprennent :
la réception, par le MSC, du message ETC transmis de manière transparente par le SCP par l'intermédiaire de la SIU ;
l'analyse d'un numéro appelé transporté dans le message ETC et la détermination du fait que le numéro appelé transporte ou non une fonction de préfixe indiquant que la lecture d'annonce à bande étroite sur le réseau IP est requise ; et
en réponse au fait que le numéro appelé transporte la fonction de préfixe, la détermination du fait que le message ETC transporte les informations indiquant que la lecture d'annonce à bande étroite sur le réseau IP est requise.

3. Procédé de lecture d'annonce de service à bande étroite sur le réseau IP selon la revendication 1, dans lequel l'envoi, par le MSC, du message de demande SIP au module de service à large bande du SCP comprend :
l'envoi, par le MSC, du message de demande SIP au module d'adaptation de protocole à large bande du SCP, et l'envoi, par le module d'adaptation de protocole à large bande, du message de demande SIP au module de service à large bande du SCP par l'intermédiaire d'un message interne.

4. Procédé de lecture d'annonce de service à bande étroite sur le réseau IP selon la revendication 1, après la transmission transparente (S101), par le MSC, de la demande d'appel à bande étroite au module de service à bande étroite du SCP par l'intermédiaire de la SIU, le procédé comprenant également :
l'assemblage, par le module de service à bande étroite du SCP, d'un numéro appelé selon une exigence de traitement de service, et l'écriture, par le module de service à bande étroite du SCP, du numéro assemblé dans l'ETC, dans lequel
l'exigence de traitement de service est une exigence de service d'un service intelligent souscrit par un utilisateur initiant la demande d'appel à bande étroite, et des paramètres du numéro appelé comprennent un préfixe et une identité, ID, d'association à bande étroite, dans lequel le préfixe représente des informations indiquant que la lecture d'annonce à bande étroite sur le réseau IP est requise, et l'ID d'association à bande étroite est utilisée pour un traitement d'association entre un service à large bande et un service à bande étroite dans le SCP.

5. Procédé de lecture d'annonce de service à bande étroite sur le réseau IP selon la revendication 1, dans lequel le message de demande SIP transporte un numéro appelé, et après l'envoi, par le MSC, du message de demande SIP au module de service à large bande du SCP, le procédé comprend également :
l'analyse, par le module de service à large bande, du numéro appelé ;
en réponse au fait que le numéro appelé transporte des informations indiquant que la lecture d'annonce à bande étroite sur le réseau IP est requise, l'acquisition, par le module de service à large bande, d'une ID d'association à bande étroite dans le numéro appelé ; et
l'invocation, par le module de service à large bande, d'un module d'adaptation de protocole à bande étroite du SCP selon l'ID d'association à bande étroite, et l'établissement, par le module de service à large bande, de l'association avec le module de service à bande étroite du SCP par l'intermédiaire du module d'adaptation de protocole à bande étroite.

6. Procédé de lecture d'annonce de service à bande étroite sur le réseau IP selon la revendication 1, dans lequel la commande, par l'intermédiaire du module d'adaptation de protocole à large bande du SCP, du serveur multimédia pour lire l'annonce comprend :
l'appel, par le module de service à large bande, du serveur multimédia par l'intermédiaire du module d'adaptation de protocole à large bande pour amener le serveur multimédia à terminer une négociation multimédia bidirectionnelle avec un appelant du MSC ;
l'envoi, par le module de service à large bande, d'un message au module d'adaptation de protocole à bande étroite par l'intermédiaire du module d'adaptation de protocole à large bande pour notifier que le module de service à bande étroite est prêt à lire l'annonce ;
en réponse à la réception par le module de service à bande étroite d'une demande ultérieure pour inviter une annonce et collecter des informations utilisateur après la demande d'appel, l'invocation d'une interface interne du module d'adaptation de protocole à bande étroite pour lire l'annonce ou inviter et collecter des informations utilisateur ;
l'invocation, par le module d'adaptation de protocole à bande étroite, de l'interface interne pour notifier au module d'adaptation de protocole à large bande de lire l'annonce ou d'inviter et de collecter les informations utilisateur ;
la notification, par le module d'adaptation de protocole à large bande par l'intermédiaire d'une interface interne, au module de service à large bande de lire l'annonce ou d'inviter et de collecter les informations utilisateur ; et
l'interaction, par le module de service à large bande, avec le serveur multimédia pour terminer la lecture de l'annonce ou pour terminer l'invitation de l'annonce et la collecte des informations utilisateur.

7. Système de lecture d'annonce de service à bande étroite sur un réseau IP, comprenant un centre de commutation mobile, MSC, un point de commande de service, SCP, une unité d'interface de signalisation, SIU, et un serveur multimédia, dans lequel le système est adapté pour mettre en œuvre le procédé selon l'une quelconque des revendications 1 à 6.

8. Support de stockage, le support de stockage stockant un ou plusieurs programmes exécutables par un ou plusieurs processeurs, qui, lorsqu'ils sont exécutés sur un système selon la revendication 7, amènent le système à mettre en œuvre le procédé selon l'une quelconque des revendications 1 à 6.
